# EUROPEAN PATENT SPECIFICATION

(11) **EP 2 743 768 B1**
(45) Date of publication and mention of the grant of the patent: **06.03.2019**
(21) Application number: 12008339.9
(22) Date of filing: 14.12.2012
(51) Int. Cl.: B60R 11/04, G03B 11/04, G03B 17/08, G03B 29/00, B60R 11/00

(54) **Optical system for an agricultural machine**
Optisches System für landwirtschaftliche Maschine
Système optique pour machine agricole

(43) Date of publication of application: 18.06.2014
(73) Proprietor: CLAAS Tractor S.A.S., 78141 Vélizy-Villacoublay Cedex (FR)
(72) Inventor: Gomez, Christophe, 92100 Boulogne Billancourt (FR)
(74) Representative: CLAAS Gruppe

(56) References cited:
- EP-A1- 1 190 907
- EP-A1- 2 020 174
- EP-A1- 2 510 775
- US-A- 4 815 757
- US-A1- 2006 261 272
- US-A1- 2011 072 773

## Description

The invention is directed to an optical system for an agricultural machine according to claim 1, to a method to operate such an optical system according to claim 12 and an agricultural machine with such an optical system according to claim 13.

The expression "agricultural machine" is to be understood in a broad sense. It not only includes all kinds of self propelled agricultural machines like tractors, tele-handlers, forage harvesters or combines, but also attachment units like bailers, mowers or trailers like forage wagons.

Optical systems are being widely used in today's agricultural machines in order to increase the user friendliness, to speed up agricultural processes like harvesting, in particular to improve the quality of those harvesting processes or the like. As an example such an optical system is provided with an optical element, that is a camera for controlling the unloading process of a field chopper (DE 10 2011 002 111 A1).

The optical system which is presently under discussion is not restricted to light receiving systems like camera systems. Accordingly, the optical system may also be a light emitting system such as a spotlight or the like.

As the agricultural machine in question is in many cases applied in rough working conditions, the optical system has to be of exceptionally robust design. Critical external conditions, which impair the operation of the optical system, may be the build up of dust and flying particles like dirt particles, stones or the like.

The above noted critical external conditions may impair the proper operation of a camera by destroying optical lenses or the like or by dirt accumulating at those components. In the end the transmission of light beams required for the proper functioning of the camera is restrained. The same is to be said for an optical system that is designed as a light emitting system.

Known optical systems comprise mechanisms for motorized movements of a camera element into a protected position (EP 1 190 907 A1; US 4,815,757 A). Critical external conditions in the above noted sense are not taken into account, though.

It is an object of the invention to provide an optical system for an agricultural machine with improved robustness against critical external conditions like the buildup of dust and flying particles.

The above noted problem is solved by an optical system for an agricultural machine according to claim 1.

The basic idea underlying the invention is to selectively protect the optical element of the optical system, which function is to receive and/or send light through an aperture, by a shield arrangement. With such mechanical protection of the element an effective mechanical protection may be guaranteed against all kinds of critical external conditions.

It is of particular importance for the invention that the shield arrangement is not permanently mechanically protecting the optical element of the optical system. The idea is to provide this mechanical protection only when it appears necessary. For the rest of the time the optical element is unaffected by the shield arrangement.

In detail the optical system may be brought into an unshield configuration, in which the aperture is free from the shield arrangement, wherein an actuator is provided for switching the optical system between the unshield configuration and a shield configuration, in which the aperture of the optical element is mechanically protected by the shield arrangement. A shield control is provided to switch the optical system via the actuator based on at least one predetermined trigger event.

With the proposed solution it is possible to guarantee that the shield arrangement on the one hand provides an effective mechanical protection of the optical elements and on the other hand leaves the optical system as unaffected in optical terms as possible such that the optical performance is restrained by the shield arrangement as little as possible.

The proposed solution follows the basic structure of a human eye which is being mechanically protected by a shield arrangement, namely an eyelid.

Further following the structure of the human eye the trigger event that triggers switching of the optical system is being detected by a sensor arrangement. In other words the optical system has a built in "reflex" for switching the shield arrangement into the shield condition.

According to claim 4 the sensor arrangement may be provided by the optical element itself which leads to low hardware costs. However, it may lead to a very reliable triggering process if the sensor arrangement which is detecting predetermined critical external conditions is provided with an additional sensor for the detection.

The further preferred embodiments according to claims 9 and 10 provide two basic constructional concepts of the optical system. According to claim 10 a shield of the shield arrangement is being movable in order to realize the different configurations of the optical system. According to claim 11 the optical element, for example the camera, is movable in order to realize the respective configurations. Here it becomes clear that the proposed solution is applicable for a large variety of agricultural processes. The number of constructional alternatives is nearly unrestricted.

A second teaching according to claim 12 is directed to a method to operate the above noted optical system. The main idea is, as noted above, that the optical system is being switched between the unshield configuration and the shield configuration by the shield control via the actuator based on at least one predetermined trigger event. The proposed method utilizes the possibilities that the constructional approach according to the first teaching is offering. With this it is possible to realize a tailored strategy for switching the optical system between the unshield configuration and the shield configuration, specifically in view of the respective external conditions. All explanations given for the proposed optical system itself are fully applicable to the second teaching.

A third teaching according to claim 13 is directed to an agricultural machine with a proposed optical system as such. Again all explanations given to the proposed optical system are fully applicable to the third teaching.

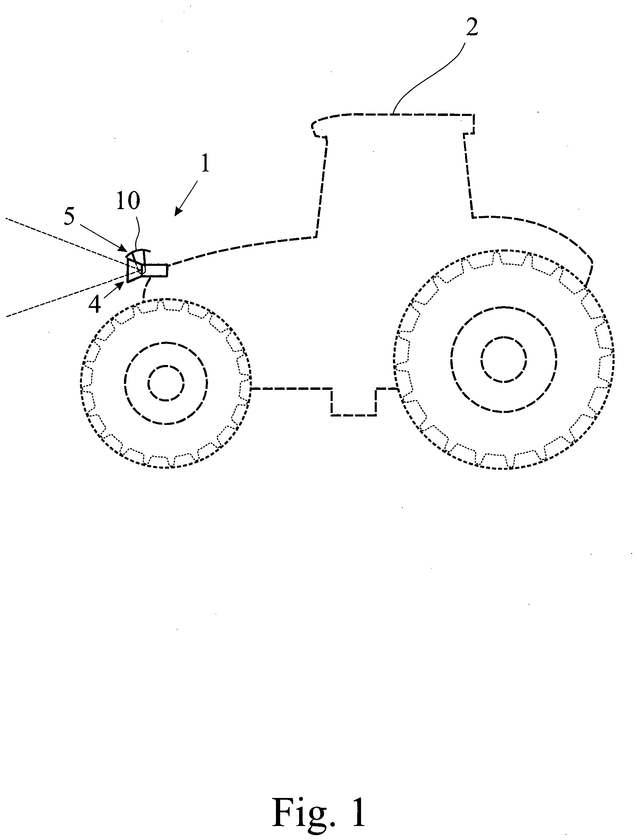

In the following the invention is being explained referring to the drawing. In the drawing show
- Fig. 1: a proposed agricultural machine which is equipped with a proposed optical system
- Fig. 2: the optical system shown in Fig. 1: a) in a first embodiment an b) in a second embodiment and
- Fig. 3: the optical system according to Fig. 2a), wherein a dirt particle is approaching the camera system in sequence a), b) and c).

The proposed optical system 1 is designed for an agricultural machine 2, which in the preferred embodiment shown in the drawing is a tractor 1. Some of the possible alternatives for the agricultural machine 2 have been specified in the general part of the specification.

The optical system 1 shown in the drawing is a camera system 1 which may be utilized for navigation by identifying contours of the respective agricultural field. However, such a camera system 1 may be used for identifying and/or detecting the location of other agricultural machines, in particular the location of loading containers of such other agricultural machines. Other application of the proposed camera system 1 may be the quality control in a harvesting process or the like.

The optical system 1 which is being designed as a camera system is to be considered only a preferred embodiment. However, all explanations given for the camera system 1 are fully applicable to all other possible embodiments of the optical system 1.

The optical system 1 comprises an optical element 3, here and preferably a camera 3, to receive light through an aperture 4. In case the optical system 1 is designed as a light emitting system like a spotlight, the optical element 3 would be some kind of a luminous element.

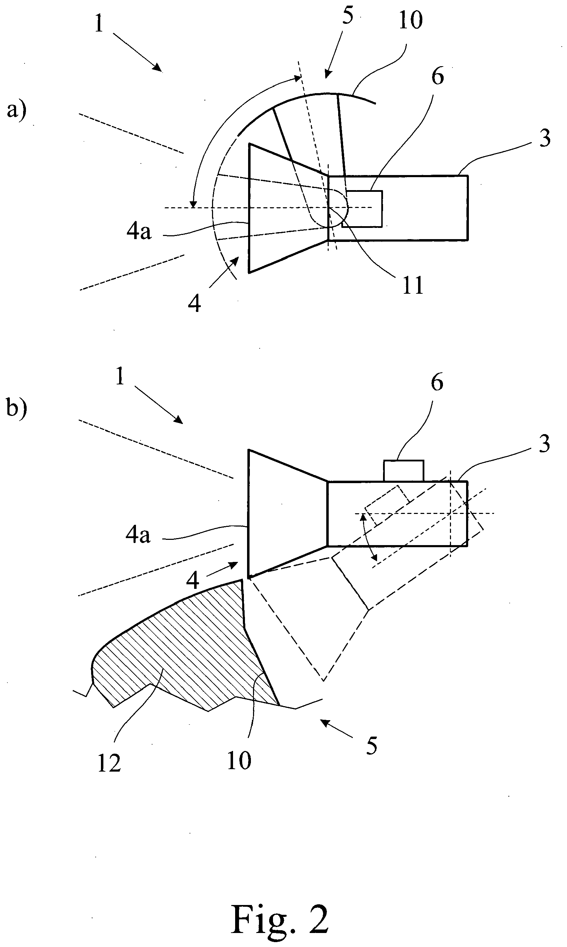

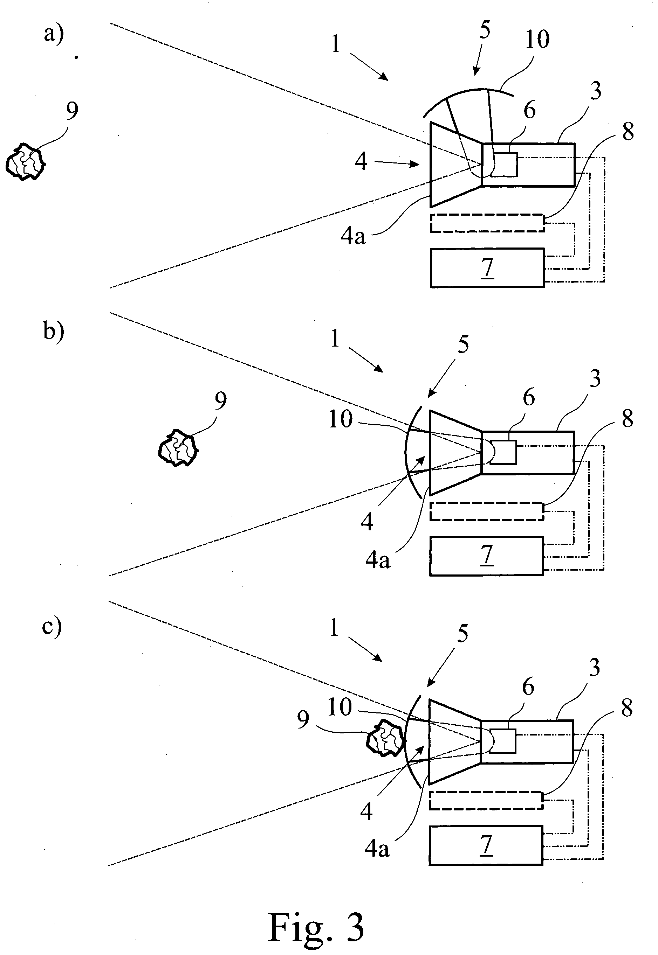

Fig. 2 shows that a shield arrangement 5 is provided to mechanically protect the optical element 3 against external critical conditions impairing the operation of the optical element 3. Fig. 3 shows for the embodiment of Fig. 2a) that the optical system 1 may be brought into a shield configuration (Fig. 3b, 3c)) in which the aperture 4 of the optical element 3 is mechanically protected by the shield arrangement. 5

Further, the optical system 1 may be brought into an unshield configuration (Fig. 3a)), in which the aperture 4 is free of the shield arrangement 5. It becomes apparent from Figs. 2 and 3 that in the unshield arrangement the optical element 3 is completely unaffected by the shield arrangement 5, while Fig. 3b, 3c) show that in the shield configuration an effective mechanical protection of the optical element 3 is guaranteed.

The optical system 1 is provided with an actuator 6 for switching the optical system 1 between the unshield configuration (Fig. 3a)) and the shield configuration (Fig. 3b, 3c)). For controlling the actuator 6 a shield control 7 is provided to switch the optical system 1 via the actuator 6 based on at least one predetermined trigger event which is to be discussed in the following.

As noted above the optical system 1 in the shown embodiment is a camera system 1, wherein the optical element 3 is a camera 3. However, in another preferred embodiment the optical system 1 is a light source emitting light trough the aperture 4. In an especially preferred embodiment the optical system 1 is a spotlight. As noted above all explanations given for the camera system 1 are fully applicable to all other embodiments, in particular to the embodiment of the optical system 1 being a light source.

A sensor arrangement is provided to detect predetermined critical external conditions impairing the operation of the optical element 3, which detection of said critical external conditions is a trigger event that triggers switching the optical system 1 into the shield configuration (Fig. 3b, 3c)) via the actuator 6. Accordingly, the sensor arrangement allows the optical system 1 to react to critical external conditions which impair the operation of the optical element 3. For example the detection of the dust building up may be detected, which detection may be a trigger event that triggers switching the optical system 1 into the shield configuration via the actuator 6.

In a compact and cost effective arrangement the optical element 3 detects the above noted predetermined critical external conditions as part of the sensor arrangement. It may also be advantageous, however, that an additional sensor 8 is provided for the detection of predetermined critical external conditions as part of the sensor arrangement. Such an optional, additional sensor 8 is indicated in Fig. 3 in broken lines.

The additional sensor 8 may for example be an ultrasonic sensor or an infrared sensor. The additional sensor 8 may be laid out as a proximity sensor or as a sensor analyzing the consistency of the surrounding air, in particular the concentration of dust within the air.

Fig. 3a), 3b) and 3c) show a sequence of an object 9 approaching the optical system 1, wherein such approach of an object 9, which may be a dirt particle, is considered an above noted predetermined critical external condition. Depending on the respective design this critical external condition may be detected as an above noted trigger event by the optical element 3 or by the additional sensor 8 of the sensor arrangement. In any case the detection of the approaching object 9 triggers the shield control 7 to switch the optical system 1 into the shield configuration (Fig. 3b)). Once the object 9 "hits" the optical system 1 (Fig. 3c) the shield arrangement 5 already provides a mechanical protection such that the optical element 3 and its proper operation is not affected by the approaching object 9. Here it becomes clear again how the proposed solution is closely related to the basic structure of a human eye with a shield arrangement 5 being designed based on the structure of a human eyelid.

In addition to the above noted reactive switching of the optical system 1 into the shield configuration it is preferred that the shield control 7 switches the optical system 1 into the shield configuration when the optical system 1 is not being utilized by the agricultural machine 2 for a predetermined amount of time. In other words, the optical system 1 is then transferred into a standby-mode and may be woken up, when the agricultural machine 2 utilizes the optical system 1 again.

It may also be advantageous that the shield control 7 switches the optical system 1 into the shield configuration if the natural lighting condition becomes too dark for the camera system 1 to work properly. In this case keeping the optical system 1 in the unshield configuration would not bring any benefit.

There are numerous possibilities to define trigger events in the above noted sense. The possibilities presented above are to be understood as examples only.

It may be advantageous as well to have the shield control 7 switch the optical system 1 regularly, in particular periodically, between the unshield configuration and the shield configuration. In this regard it may also be advantageous to regularly bring the optical system 1 into the shield configuration for a short period of time, which may be considered as a "blinking action". Such regular configuration changes ensure that the mechanical components of the shield arrangement 5 and the actuator 6 are not being clogged by dust or the like. Further such ongoing configuration changes are particularly advantageous if a configuration change is also connected to a cleaning process of the optical element 3 as will be explained later.

In a preferred embodiment the shield arrangement 5 is at least partly transparent such that at least a reduced operation of the optical element 3 is possible in the shield configuration. With this a continuous operation of the optical element 3 may be guaranteed independently of the respective configuration of the optical system 1.

The optical system 1 shown in Fig. 2a) comprises a shield 10, wherein the shield 10, driven by the actuator 6, is movable between a shield position (Fig. 3b, 3c)), in which the shield mechanically protects the aperture 4 of the optical element 3, and an unshield position, in which the aperture 4 is free from the shield 10. The shield position and the unshield position correspond to the shield configuration and the unshield configuration of the optical system 1, respectively.

There are a number of possibilities for the kinematics of movement for the shield 10. Here and preferably the shield 10 during its movement is sliding along the aperture 4 according to the movement of an eyelid as noted above. This sliding motion may at the same time be a pivot movement around a pivot axis 11 shown in Fig. 2a). The movement of the shield 10 may as well be a linear movement or any other movement.

Fig. 2b)) shows another preferred embodiment, wherein the shield arrangement 5 is part of a housing 12 of the optical element 3, wherein the optical element 3, driven by the actuator 6, is movable between a shield position (solid lines in Fig. 2b)), in which the shield arrangement 5 mechanically protects the aperture 4 of the optical element 3, and an unshield position (broken lines in Fig. 2b)), in which the aperture 4 of the optical element 3 is free of the shield arrangement 5. The shield arrangement 5 is provided with a shield 10 for protecting the aperture 4, as explained for the embodiment shown in Fig. 2a)).

The embodiment shown in Fig. 2b) is of particular importance for applications in which the optical design in the shield configuration is important. This is because with the embodiment according to Fig. 2b) the complete optical system 1 may be "hidden" in the housing 12, if a respective cover is being provided on top of the optical element 3, which is not shown in the drawing.

The aperture 4 noted above is preferably designed as an aperture window 4a made of transparent material. The aperture window 4a may be part of a lens system of the optical element 3. It is also possible that the aperture window 4a is simply a glass plate without any lens effect.

In a further preferred embodiment the arrangement is such that the shield arrangement 5, in particular the shield 10, during switching between the shield configuration and the unshield configuration is or comes into engagement with the aperture window 4a in a cleaning manner. For this it is possible that the aperture window 4a during switching between the shield configuration and the unshield configuration wipes along the aperture window 4a. Here it becomes clear that the above noted blinking action, which is preferably taking place regularly, leads to a high operational safety of the optical element 3 due to ongoing cleaning cycles.

According to another teaching the method to operate the proposed optical system 1 is claimed as such. It is of particular importance for the claimed method that the optical system 1 is being switched between the unshield configuration and the shield configuration by the shield control 7 via the actuator 6 based on at least one predetermined trigger event as noted above. All explanations given for the operation of the optical system 1 are fully applicable to this additional teaching.

According to another teaching, the agricultural machine 2, that is provided with a proposed optical system 1, is claimed as such as well. Again, all explanations given for the agricultural machine 2 as such are fully applicable.

## Claims

1. Optical system (1) for an agricultural machine (2), comprising an optical element (3) to receive and/or send light through an aperture (4), wherein a shield arrangement (5) is provided to mechanically protect the optical element (3) against external critical conditions impairing its operation, wherein the optical system (1) may be brought into a shield configuration, in which the aperture (4) of the optical element (3) is mechanically protected by the shield arrangement (5), wherein the optical system (1) may be brought into an unshield configuration, in which the aperture (4) is free of the shield arrangement (5), wherein an actuator (6) is provided for switching the optical system (1) between the unshield configuration and the shield configuration and wherein a shield control (7) is provided to switch the optical system (1) via the actuator (6) based on at least one predetermined trigger event, wherein a sensor arrangement is provided to detect predetermined critical external conditions impairing the operation of the optical element (3) and wherein the detection of a critical external condition is a trigger event that triggers switching the optical system (1) into the shield configuration via the actuator (6).

2. Optical system according to claim 1, **characterized in that** the optical system (1) is a camera system (1) and the optical element (3) is a camera (3).

3. Optical system according to claim 1 or 2, **characterized in that** the optical system (1) is a light source, preferably a spotlight.

4. Optical system according to one of the preceding claims, **characterized in that** the optical element (3) detects predetermined critical conditions as part of the sensor arrangement, and/or that an additional sensor (8) is provided for the detection of predetermined critical conditions as part of the sensor arrangement.

5. Optical system according to claim 4, **characterized in that** the additional sensor (8) is an ultrasonic sensor or an infrared sensor.

6. Optical system according to one of the preceding claims, **characterized in that** a predetermined critical condition is an object (9) approaching the optical system (1), and/or that a predetermined critical external condition is dust developing in the proximity of the optical system (1).

7. Optical system according to one of the preceding claims, **characterized in that** the shield control (7) switches the optical system (1) into the shield configuration when the optical system (1) is not being utilized by the agricultural machine (2) for a predetermined amount of time.

8. Optical system according to one of the preceding claims, **characterized in that** the shield arrangement (5) is at least partly transparent such that at least a reduced operation of the optical element (3) is possible in the shield configuration.

9. Optical system according to one of the preceding claims, **characterized in that** the shield arrangement (5) comprises a shield (10), wherein the shield (10), driven by the actuator (6), is moveable between a shield position, in which the shield (10) mechanically protects the aperture (4) of the optical element (3), and an unshield position, in which the aperture (4) is free from the shield (10), preferably, wherein the shield (10) during its movement is sliding along the aperture (4) as the movement of an eyelid.

10. Optical system according to one of the preceding claims, **characterized in that** the shield arrangement (5) is part of a housing (12) of the optical element (3), wherein the optical element (3), driven by the actuator (6), is moveable between a shield position, in which the shield arrangement (5) mechanically protects the aperture (4) of the optical element (3), and an unshield position, in which the aperture (4) of the optical element (3), is free of the shield arrangement (5).

11. Optical system according to one of the preceding claims, **characterized in that** the aperture (4) is designed as an aperture window (4a) of transparent material and that the shield arrangement (5) during switching between the shield configuration and the unshield configuration is or comes into engagement with the aperture window (4a) in a cleaning manner, preferably, that the aperture window (4a) during switching between shield configuration and unshield configuration wipes along the aperture window (4a).

12. Method to operate an optical system (1) ; for an agricultural machine according to one of the preceding claims comprising the steps of: switching the optical system (1) between an unshield configuration and a shield configuration by a shield control (7) via an actuator (6) based on at least one predetermined trigger event, detecting predetermined critical conditions impairing the operation of the optical element (3) by a sensor arrangement and wherein the detection of a critical condition is a trigger event that triggers switching the optical system (1) into the shield configuration via the actuator (6).

13. Agricultural machine with an optical system (1) according to one of the claims 1 to 11.

## Patentansprüche

1. Optisches System (1) für eine Landmaschine (2), umfassend ein optisches Element (3) zum Empfangen und/oder Senden von Licht durch eine Apertur (4), wobei eine Schildanordnung (5) vorgesehen ist zum mechanischen Schützen des optischen Elements (3) gegen kritische äußere Bedingungen, die dessen Betrieb beeinträchtigen, wobei das optische System (1) in eine Schildkonfiguration gebracht werden kann, in welcher die Apertur (4) des optischen Elements (3) durch die Schildanordnung (5) mechanisch geschützt ist, wobei das optische System (1) in eine Nicht-Schildkonfiguration gebracht werden kann, in welcher die Apertur (4) gegenüber der Schildanordnung (5) frei ist, wobei ein Aktuator (6) zum Umschalten des optischen Systems (1) zwischen der Nicht-Schildkonfiguration und der Schildkonfiguration vorgesehen ist und wobei eine Schildsteuerung (7) vorgesehen ist zum Umschalten des optischen Systems (1) über den Aktuator (6) basierend auf mindestens einem vorbestimmten Auslöserereignis, wobei eine Sensoranordnung zum Detektieren kritischer äußerer Bedingungen, die den Betrieb des optischen Elements (3) beeinträchtigen, vorgesehen ist und wobei die Detektion einer kritischen äußeren Bedingung ein Auslöserereignis ist, das Umschalten des optischen Systems (1) Über den Aktuator (6) in die Schildkonfiguration auslöst.

2. Optisches System nach Anspruch 1, **dadurch gekennzeichnet, dass** das optische System (1) ein Kamerasystem (1) ist und das optische Element (3) eine Kamera (3) ist.

3. Optisches System nach Anspruch 1 oder 2, **dadurch gekennzeichnet, dass** das optische System (1) eine Lichtquelle, bevorzugt ein Scheinwerfer ist.

4. Optisches System nach einem der vorhergehenden Ansprüche, **dadurch gekennzeichnet, dass** das optische Element (3) als Teil der Sensoranordnung vorbestimmte kritische Bedingungen detektiert und/oder dass ein zusätzlicher Sensor (8) als Teil der Sensoranordnung für die Detektion von vorbestimmten kritischen Bedingungen vorgesehen ist.

5. Optisches System nach Anspruch 4, **dadurch gekennzeichnet, dass** der zusätzliche Sensor (8) ein Ultraschallsensor oder ein Infrarotsensor ist.

6. Optisches System nach einem der vorhergehenden Ansprüche, **dadurch gekennzeichnet, dass** eine vorbestimmte kritische Bedingung ein Objekt (9) ist, das sich dem optischen System (1) nähert, und/oder dass eine vorbestimmte kritische äußere Bedingung Staub ist, der sich in der Nähe des optischen Systems (1) entwickelt.

7. Optisches System nach einem der vorhergehenden Ansprüche, **dadurch gekennzeichnet, dass** die Schildsteuerung (7) das optische System (1) in die Schildkonfiguration umschaltet, wenn das optische System (1) für einen vorbestimmten Zeitraum von der Landmaschine (2) nicht genutzt wurde.

8. Optisches System nach einem der vorhergehenden Ansprüche, **dadurch gekennzeichnet, dass** die Schildanordnung (5) zumindest teilweise transparent ist, so dass in der Schildkonfiguration zumindest ein reduzierter Betrieb des optischen Elements (3) möglich ist.

9. Optisches System nach einem der vorhergehenden Ansprüche, **dadurch gekennzeichnet, dass** die Schildanordnung (5) einen Schild (10) umfasst, wobei der Schild (10), angetrieben von dem Aktuator (6), zwischen einer Schildstellung, in welcher der Schild (10) die Apertur (4) des optischen Elements (3) mechanisch schützt, und einer Nicht-Schildstellung, in welcher die Apertur (4) gegenüber dem Schild (10) freiliegt, bewegbar ist, wobei der Schild (10) während seiner Bewegung bevorzugt wie die Bewegung eines Augenlids entlang der Apertur (4) gleitet.

10. Optisches System nach einem der vorhergehenden Ansprüche, **dadurch gekennzeichnet, dass** die Schildanordnung (5) Teil eines Gehäuses (12) des optischen Elements (3) ist, wobei das optische Element (3), angetrieben von dem Aktuator (6), zwischen einer Schildstellung, in welcher die Schildanordnung (5) die Apertur (4) des optischen Elements (3) mechanisch schützt, und einer Nicht-Schildstellung, in welcher die Apertur (4) des optischen Elements (3) gegenüber der Schildanordnung (5) freiliegt, bewegbar ist.

11. Optisches System nach einem der vorhergehenden Ansprüche, **dadurch gekennzeichnet, dass** die Apertur (4) als ein Aperturfenster (4a) aus einem transparenten Material konstruiert ist und dass die Schildanordnung (5) während Umschaltens zwischen der Schildkonfiguration und der Nicht-Schildkonfiguration auf eine reinigende Weise in Eingriff mit dem Aperturfenster (4a) steht oder in Eingriff gelangt, bevorzugt, dass das Aperturfenster (4a) während Umschaltens zwischen Schildkonfiguration und Nicht-Schildkonfiguration entlang des Aperturfensters (4a) wischt.

12. Verfahren zum Betreiben eines optischen Systems (1) für eine Landmaschine gemäß einem der vorhergehenden Ansprüche, umfassend die folgenden Schritte:
Umschalten des optischen Systems (1) zwischen einer Nicht-Schildkonfiguration und einer Schildkonfiguration über einen Aktuator (6) durch eine Schildsteuerung (7), basierend auf mindestens einem vorbestimmten Auslöserereignis,
Detektieren von vorbestimmten kritischen Bedingungen, die den Betrieb des optischen Elements (3) beeinträchtigen, durch eine Sensoranordnung und wobei die Detektion einer kritischen Bedingung ein Auslöserereignis ist, das Umschalten des optischen Systems (1) durch den Aktuator (6) in die Schildkonfiguration auslöst.

13. Landmaschine mit einem optischen System (1) gemäß einem der Ansprüche 1 bis 11.

## Revendications

1. Système optique (1) pour une machine agricole (2), comprenant un élément optique (3) pour recevoir et/ou envoyer de la lumière à travers une ouverture (4), où un agencement de blindage (5) est fourni pour protéger mécaniquement l'élément optique (3) contre des conditions critiques externes nuisant à son fonctionnement, où le système optique (1) peut être amené dans une configuration de blindage, dans laquelle l'ouverture (4) de l'élément optique (3) est protégée mécaniquement par l'agencement de blindage (5), où le système optique (1) peut être amené dans une configuration non blindée, où l'ouverture (4) est exempte de l'agencement de blindage (5), un actionneur (6) étant pourvu pour commuter le système optique (1) entre la configuration non blindée et la configuration de blindage et une commande de blindage (7) étant fournie pour commuter le système optique (1) par l'intermédiaire de l'actionneur (6) sur la base d'au moins un événement déclencheur prédéterminé, où un agencement de capteurs est fourni pour détecter des conditions externes critiques prédéterminées nuisant au fonctionnement de l'élément optique (3) et où la détection d'une condition externe critique est un événement déclencheur qui déclenche la commutation du système optique (1) dans la configuration de blindage par l'intermédiaire de l'actionneur (6).

2. Système optique selon la revendication 1, **caractérisé en ce que** le système optique (1) est un système de caméra (1) et l'élément optique (3) est une caméra (3).

3. Système optique selon la revendication 1 ou la revendication 2, **caractérisé en ce que** le système optique (1) est une source de lumière, de préférence un éclairage directionnel.

4. Système optique selon l'une des revendications précédentes, **caractérisé en ce que** l'élément optique (3) détecte des conditions critiques prédéterminées dans le cadre de l'agencement de capteurs et/ou **en ce qu'**un capteur supplémentaire (8) est fourni pour la détection de conditions critiques prédéterminées dans le cadre de l'agencement de capteurs.

5. Système optique selon la revendication 4, **caractérisé en ce que** le capteur supplémentaire (8) est un capteur à ultrasons ou un capteur infrarouge.

6. Système optique selon l'une des revendications précédentes, **caractérisé en ce qu'**une condition critique prédéterminée est un objet (9) s'approchant du système optique (1), et/ou **en ce qu'**une condition critique extérieure prédéterminée est une poussière se développant à proximité du système optique (1).

7. Système optique selon l'une des revendications précédentes, **caractérisé en ce que** la commande de blindage (7) commute le système optique (1) dans la configuration de blindage lorsque le système optique (1) n'est pas utilisé par la machine agricole (2) pendant une durée prédéterminée.

8. Système optique selon l'une des revendications précédentes, **caractérisé en ce que** l'agencement de blindage (5) est au moins partiellement transparent de manière à ce qu'au moins un fonctionnement réduit de l'élément optique (3) soit possible dans la configuration de blindage.

9. Système optique selon l'une des revendications précédentes, **caractérisé en ce que** l'agencement de blindage (5) comprend un blindage (10), où le blindage (10), entraîné par l'actionneur (6), est mobile entre une position de blindage, dans laquelle le blindage (10) protège mécaniquement l'ouverture (4) de l'élément optique (3), et une position non blindée, dans laquelle l'ouverture (4) est exempte de blindage (10), de préférence où le blindage (10) glisse, pendant son mouvement, le long de l'ouverture (4) comme le mouvement d'une paupière.

10. Système optique selon l'une des revendications précédentes, **caractérisé en ce que** l'agencement de blindage (5) fait partie d'un boîtier (12) de l'élément optique (3), où l'élément optique (3), entraîné par l'actionneur (6), est mobile entre une position de blindage, dans laquelle l'agencement de blindage (5) protège mécaniquement l'ouverture (4) de l'élément optique (3), et une position non blindée, dans laquelle l'ouverture (4) de l'élément optique (3) est exempte de l'agencement de blindage (5).

11. Système optique selon l'une des revendications précédentes, **caractérisé en ce que** l'ouverture (4) est conçue sous la forme d'une fenêtre d'ouverture (4a) en matériau transparent et **en ce que** l'agencement de blindage (5), lors de la commutation entre la configuration de blindage et la configuration non blindée, est ou vient en prise avec la fenêtre d'ouverture (4a) de manière propre, de préférence, **en ce que** la fenêtre d'ouverture (4a), lors de la commutation entre la configuration de blindage et la configuration non blindée, balaye le long de la fenêtre d'ouverture (4a).

12. Procédé de fonctionnement d'un système optique (1) pour une machine agricole selon l'une des revendications précédentes comprenant les étapes suivantes :
commuter le système optique (1) entre une configuration non blindée et une configuration de blindage au moyen d'une commande de blindage (7) par l'intermédiaire d'un actionneur (6) sur la base d'au moins un événement déclencheur prédéterminé, détecter des conditions critiques prédéterminées nuisant au fonctionnement de l'élément optique (3) par un agencement de capteurs, et où la détection d'une condition critique est un événement déclencheur qui déclenche la commutation du système optique (1) dans la configuration de blindage par l'intermédiaire de l'actionneur (6).

13. Machine agricole disposant d'un système optique (1) selon l'une des revendications 1 à 11.
